# EUROPEAN PATENT SPECIFICATION

(11) **EP 4 666 532 B1**
(45) Date of publication and mention of the grant of the patent: **04.11.2026**
(21) Application number: 24711678.3
(22) Date of filing: 02.02.2024
(51) Int. Cl.: H04L 9/00

(54) **FAULT ATTACK COUNTERMEASURE USING UNIFIED MASK LOGIC**
FEHLERANGRIFFGEGENMASSNAHME UNTER VERWENDUNG VON VEREINHEITLICHTER MASKENLOGIK
CONTRE-MESURE D'ATTAQUE PAR ERREUR EN UTILISANT UNE LOGIQUE DE MASQUE UNIFIÉE

(30) Priority: 14.02.2023 US 202318169136
(43) Date of publication of application: 24.12.2025
(73) Proprietor: QUALCOMM INCORPORATED, San Diego, California 92121-1714 (US)
(72) Inventor: CAULLERY, Florian Reneld Ghislain, San Diego, California 92121 (US); AMIEL, Frederic, San Diego, California 92121 (US)
(74) Representative: Reddie & Grose LLP
(86) International application number: PCT/US2024/014334
(87) International publication number: WO 2024/173079

(56) References cited:
- EP-A1- 3 503 460
- GB-A- 2 468 419

## Description

### FIELD

The present disclosure generally relates to mitigation of fault attacks seeking to compromise security assets, such as, for example, cryptographic keys. For example, aspects of the present disclosure relate to systems and techniques for performing fault attack countermeasures using unified mask logic.

### BACKGROUND

Computing devices often employ various techniques to protect data. As an example, data may be subjected to encryption and decryption techniques in a variety of scenarios, such as writing data to a storage device, reading data from a storage device, writing data to or reading data from a memory device, encrypting and decrypting blocks and/or volumes of data, encrypting and decrypting digital content, performing inline cryptographic operations, etc. Such encryption and decryption operations are often performed, at least in part, using a security information asset, such as a cryptographic key, a derived cryptographic key, etc. As computing devices become more advanced, more advanced techniques for securing data may be used. In some examples, attackers use fault attacks (e.g., various forms of fault injection techniques) to ascertain information about cryptographic keys. In some examples, if an attacker successfully obtains a cryptographic key used when executing a cryptographic algorithm on a computing device, the security of any data protected using the cryptographic key may be considered to have failed. Therefore, it may be advantageous to develop a technique for securing a computing device against such attacks.

GB 2468419 A relates to a circuit for detecting data or address errors in a smart card. An error detection circuit for a smart card performs logic operations on data carried on a data bus or on an address carried on an address bus to determine if the data or address has been corrupted. The circuit comprises a first logic circuit configured to perform a logic operation (e.g. XOR) on input data and a first pattern to generate a first output value, a second logic circuit configured to perform a second logic operation on input data and a second pattern to generate a second output value, a third logic circuit configured to perform a logic operation on the first and second output values to generate a third value, and a detector circuit configured to compare the third output value with a value corresponding to the logical combination of the first and second patterns and to recognize an error if the values are not equal. The error detection may be combined with a cryptographic system which encrypts data using an address associated with the data.

### SUMMARY

The scope of protection is defined in the independent claims, to which reference should now be made. Optional features are presented in the dependent claims.

Systems and techniques are described herein for performing security processing. For example, cryptographic algorithms may be executed using a single circuit that implements either standard logic or inverted logic based on a mask provided to the logic. By using a single circuit, characteristics of execution (e.g., power consumption) may be the same regardless of whether the standard or inverted logic was used, which reduces the ability of various side channel observations from being used to determine which type of logic is being used.

In some aspects, one or more of the apparatuses described herein is, is part of, and/or includes a mobile or wireless communication device (e.g., a mobile telephone or other mobile device), an extended reality (XR) device or system (e.g., a virtual reality (VR) device, an augmented reality (AR) device, or a mixed reality (MR) device), a wearable device (e.g., a network-connected watch or other wearable device), a vehicle or a computing device or component of a vehicle, a camera, a personal computer, a laptop computer, a server computer or server device (e.g., an edge or cloud-based server, a personal computer acting as a server device, a mobile device such as a mobile phone acting as a server device, an XR device acting as a server device, a vehicle acting as a server device, a network router, or other device acting as a server device), a system-on-a-chip (SoC), any combination thereof, and/or other type of device. In some aspects, the apparatus(es) include(s) a display for displaying one or more images, notifications, and/or other displayable data. In some aspects, the apparatus(es) include(s) can include one or more sensors (e.g., one or more RF sensors), such as one or more gyroscopes, one or more gyrometers, one or more accelerometers, any combination thereof, and/or other sensor(s).

This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings, and each claim.

The foregoing, together with other features and examples, will become more apparent upon referring to the following specification, claims, and accompanying drawings.

### BRIEF DESCRIPTION OF THE DRAWINGS

Illustrative examples of the present application are described in detail below with reference to the following figures:
FIG. 1 is a block diagram illustrating certain components of a computing device, in accordance with some examples;
FIG. 2 is a diagram illustrating an example of a logic circuit for mitigating fault injection attacks in accordance with some examples;
FIG. 3 is a diagram illustrating an example of a logic circuit for mitigating fault injection attacks in accordance with some examples;
FIG. 4 is a diagram illustrating an example of a logic circuit for mitigating fault injection attacks in accordance with some examples;
FIG. 5 is a diagram illustrating an example of a logic circuit for mitigating fault injection attacks in accordance with some examples;
FIG. 6 is a flow diagram illustrating an example process for providing countermeasures to fault injection attacks, in accordance with some examples;
FIG. 7 is a diagram illustrating an example of a computing system for implementing certain aspects described herein.

### DETAILED DESCRIPTION

Certain aspects and examples of this disclosure are provided below. Some of these aspects and examples may be applied independently and some of them may be applied in combination, as would be apparent to those of skill in the art. In the following description, for the purposes of explanation, specific details are set forth in order to provide a thorough understanding of examples of the application. However, it will be apparent that various examples may be practiced without these specific details. The figures and description are not intended to be restrictive. Additionally, certain details known to those of ordinary skill in the art may be omitted to avoid obscuring the description.

In the below description of the figures, any component described with regard to a figure, in various examples described herein, may be equivalent to one or more like-named (or numbered) components described with regard to any other figure. For brevity, descriptions of these components may not be wholly repeated with regard to each figure.

The ensuing description provides illustrative examples only, and is not intended to limit the scope, applicability, or configuration of the disclosure. Rather, the ensuing description of the illustrative examples will provide those skilled in the art with an enabling description for implementing an exemplary example. It should be understood that various changes may be made in the function and arrangement of elements without departing from the scope of the appended claims.

As used herein, the phrase operatively connected, or operative connection (or any variation thereof), means that there exists between elements/components/devices, etc. a direct or indirect connection that allows the elements to interact with one another in some way. For example, the phrase 'operatively connected' may refer to any direct (e.g., wired directly between two devices or components) or indirect (e.g., wired and/or wireless connections between any number of devices or components connecting the operatively connected devices) connection. Thus, any path through which information may travel may be considered an operative connection. Additionally, operatively connected devices and/or components may exchange things, and/or may inadvertently share things, other than information, such as, for example, electrical current, radio frequency signals, power supply interference, interference due to proximity, interference due to re-use of the same wire and/or physical medium, interference due to re-use of the same register and/or other logical medium, etc.

Systems, apparatuses, processes (also referred to as methods), and computer-readable media (collectively referred to as "systems and techniques") are described herein for providing countermeasures to mitigate the likelihood that a fault attack compromises security of a computing device. In some examples, cryptographic algorithms are used as building blocks of security of computing devices, protocols executed thereon, etc.

Cryptographic algorithms are algorithms used for performing cryptographic operations (e.g., encryptions and/or decryption of data). Examples of cryptographic algorithms include, but are not limited to, symmetric key algorithms (e.g., the Advanced Encryption Standard (AES) family of algorithms), and asymmetric key algorithms (e.g., public-private key encryption techniques). Cryptographic algorithms often use cryptographic keys to perform encryption operations, such as encryption and decryption of data. Encryption refers to the process of using a cryptographic key and logic implemented in hardware (e.g., circuitry), software, firmware, or any combination thereof that implements a cryptographic algorithm to transform plaintext into ciphertext. Decryption refers to the opposite process, in which ciphertext is decoded back into plaintext, which may then be consumed by a relevant entity (e.g., a computing device, software, etc.). Many cryptographic algorithms are designed such that within reasonable bounds of computing resources, protected data may not be recovered without the cryptographic key, and expected ciphertext may not be created without the cryptographic key. Accordingly, security of such cryptographic keys is important for securing computing devices.

Techniques for preventing an attacker from obtain a cryptographic key often include measures such as key lifecycle management, limiting physical and logical access to stored keys, limiting and securing any transmission of keys to/from and/or within computing devices, etc. However, such measures may not secure against attack types such as fault injection attacks. Fault injection attacks may introduce a fault into a computing device and observing the outcome of the injection to gain information about the cryptographic key being used and/or the logic executing a cryptographic algorithm. As an example, certain bits being used during execution of the cryptographic algorithm may be flipped and/or purposely kept at a certain value (e.g., always zero or always one) during execution of a cryptographic algorithm. Monitoring the effects of such a fault injection may allow an attacker to obtain information, which may ultimately lead to the compromising of a cryptographic key and/or the logic executing the cryptographic algorithm.

Faults may be injected in any of a variety of ways. Techniques for injecting faults may include, but are not limited to, application of voltages, changing environmental conditions (e.g., temperature), application of electromagnetic pulses, modifying connections within logic, etc. A cryptographic key may be recovered by injecting a fault into one execution of a cryptographic algorithm but not another, and ascertaining the difference in the output (e.g., a differential fault attack), or the absence of a difference (e.g., ineffective fault attack), either of which may be used to gain information about a cryptographic key. Such information may, for example, include obtaining the key over time, narrowing a space to be searched to find the key, etc.

Solutions are needed for mitigating the effects of fault injection attacks attempting to compromise cryptographic keys. Fault injection mitigation techniques have been proposed, such as circuit duplication, error correction codes, secure multi-party computation, etc., each of which include some form of circuit duplication. Such techniques may execute the cryptographic algorithm twice and compare the outputs. If the outputs match, then the output may be used. If the outputs do not match, then there may have been fault injection, in which case the output is randomized and not used for its intended purpose. However, such measures may not be effective against fault attacks that do not change the output (e.g., statistical ineffective fault attacks). Such attacks may be somewhat mitigated using techniques that execute a cryptographic algorithm in both standard (e.g., non-inverted) logic and inverted logic, with the choice of which logic being used determined by a randomly generated bit. For example, standard logic may be used when the random bit is zero, while inverted logic is used when the random bit is one. In such a technique, whichever logic is used may be executed twice, and the outputs may be compared. If the outputs of the two executions do not match, the output may be randomized and not used, while if the outputs match, the output may be used. Thus, an attacker may not be able to determine which logic was used, and thus not be able to determine the effect of the fault injection. However, such logic (e.g., standard and inverted) may be implemented in separate circuitry, meaning that an attacker may be able to determine which was used by using side channel attacks (e.g., when the execution of the two circuits has different power consumption characteristics, timing characteristics, electromagnetic characteristics, etc.).

The systems and techniques described herein provide countermeasures to such side channel attacks being used in combination with fault injection to obtain information about cryptographic keys. In some examples, cryptographic algorithms are executing using a single circuit that implements either standard logic or inverted logic based on a mask provided to the logic. By using a single circuit, characteristics of execution (e.g., power consumption) may be the same regardless of whether the standard or inverted logic was used, which reduces the ability of various side channel observations from being used to determine which type of logic is being used.

In some examples, any number of inputs (e.g., bits) are provided to the circuitry implementing the non-inverted (e.g., standard) and inverted logic for executing the cryptographic algorithm, along with a random mask. In some examples, non-inverted logic is any hardware (e.g., circuitry), software, firmware, or any combination thereof to implement logic configured to execute at least a portion of a cryptographic algorithm to produce an output, while inverted logic produces an output that is an inverted form of the output of the standard logic. As a simplified, non-limiting example, logic gates may be implemented (e.g., in a field programmable gate array (FPGA)) that, when implementing standard logic, produces any number of bits as output, while when inverted logic is used, the output is such that each bit is the opposite of the output produced using the standard logic (e.g., 10101010 (standard) vs. 01010101 (inverted)). In some examples, when the mask dictates that standard logic is to be used, the input bits are provided to the circuit being used, but when the random mask being used dictates that inverted logic is to be used, the input bits are inverted before being provided to the circuit, leading to an inverted output relative to the output obtained using the standard logic, thereby allowing a single circuit to be used as either standard logic or inverted logic. In some examples, a single random mask (e.g., zero bit or one bit) may be used to determine whether standard or inverted logic is used for all inputs. In some examples, there may be any number of bits in the random mask, each of which is used to determine whether standard or inverted logic is used for portions of the inputs and outputs. As an example, the random mask may be a set of random bits with a quantity that matches the quantity of input bits plus the quantity of output bits, and each bit of the random mask controls whether standard or inverted logic is used from a corresponding input bit or output bit. In such an example, the mask bits corresponding to input bits may determine whether the input bits to be provided to the logic are or are not inverted, and the mask bits corresponding to the output bits may be used to determine whether the output bits are or are not inverted

In some examples, two instances of the unique circuit are used, with one being provided a mask indicating that standard logic should be implemented, and the other mask being an inverted instance of the first mask, thus indicating that inverted logic should be implemented. For any given execution, which circuit implements which type of logic is randomly selected based on the mask, such that either circuit may be implementing standard logic for a given execution, with the corresponding other circuit implementing inverted logic (via inverting the input bits, as discussed above). In some examples, the two instances of the circuit are executed in parallel. In examples where masks are used with bits of the mask corresponding to input and output bits (as discussed above) are each random, a different random mask may be used for the two separate executions of the circuit instances, which may be performed in parallel or sequentially. In this example, the executions may be performed sequentially because the two multi-bit random masks are random and unrelated.

Therefore, in some examples, an attacker attempting to gain information about a cryptographic key being used via side channel measurements to determine whether standard logic or inverted logic is being used is unable to discern which type of logic is being used in which circuit. Additionally, in some examples, as the two circuits are the same, no difference in characteristics during execution (e.g., power, timing, etc.) may be ascertained, further limiting an attacker's ability to learn which logic is being implemented, thereby preventing the attacker from being able to discern the effect, or lack thereof, of any invented fault.

In some aspects, to determine if there has been a potential fault injection attack, the outputs of the standard logic execution and the inverted logic execution are compared to determine whether the output of the inverted logic is indeed the inverted from of the output of the standard logic. In some cases, if the comparison is successful, the output may be used. In some examples, of the comparison is not successful (e.g., the inverted logic output is not an inversion of the standard logic output), then the output may be subjected to a randomization so that even if the output is obtained, it does not provide any useful information that may allow an attacker using fault injection to obtain any information about the cryptographic key or the logic being executed. As an example, the randomization may include multiplying each output by a randomly generated number, and then performing a logical operation (e.g., an exclusive-or (XOR) operation) using the two randomized outputs. In some examples in which the random mask is a set of random bits corresponding to the various input and output bits, the comparison may require being aware of the masks applied to the separate logic executions to be able to perform the comparison.

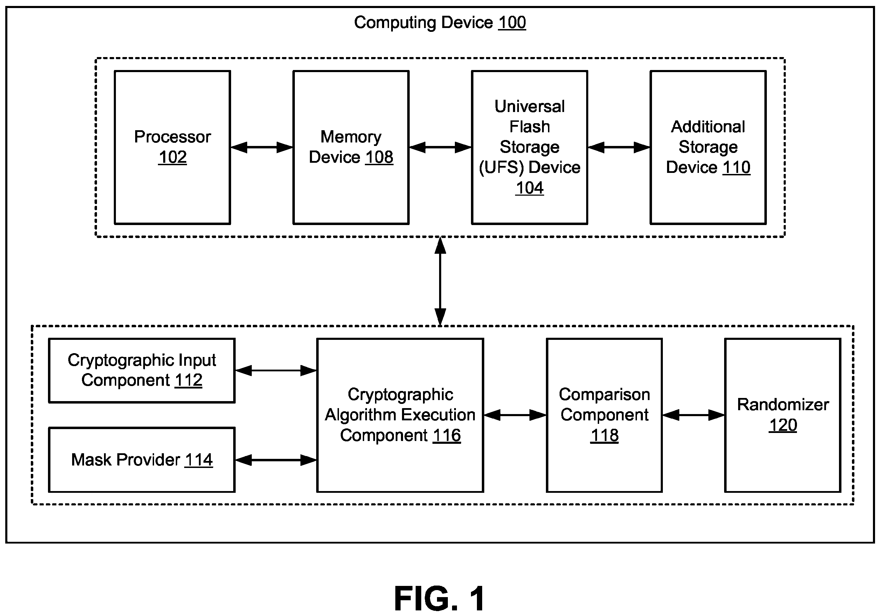

Various aspects of the techniques described herein will be discussed below with respect to the figures. FIG. 1 is a block diagram illustrating an example of a computing device 100. As shown, the computing device 100 includes a processor 102, a universal flash storage (UFS) device 104, a memory device 108, an additional storage device 110, a cryptographic input component 112, a mask provider 114, a cryptographic algorithm execution component 116, a comparison component 118, and a randomizer 120. Each of these components is described below.

The computing device 100 is any device, portion of a device, or any set of devices capable of electronically processing instructions and may include, but is not limited to, any of the following: one or more processors (e.g. components that include integrated circuitry, memory, input and output device(s) (not shown), non-volatile storage hardware, one or more physical interfaces, any number of other hardware components (not shown), and/or any combination thereof. Examples of computing devices include, but are not limited to, a mobile device (e.g., laptop computer, smart phone, personal digital assistant, tablet computer, automobile computing system, and/or any other mobile computing device), an Internet of Things (IoT) device, a server (e.g., a blade-server in a blade-server chassis, a rack server in a rack, etc.), a desktop computer, a storage device (e.g., a disk drive array, a fibre channel storage device, an Internet Small Computer Systems Interface (iSCSI) storage device, a tape storage device, a flash storage array, a network attached storage device, etc.), a network device (e.g., switch, router, multi-layer switch, etc.), a wearable device (e.g., a network-connected watch or smartwatch, or other wearable device), a robotic device, a smart television, a smart appliance, an extended reality (XR) device (e.g., augmented reality, virtual reality, etc.), any device that includes one or more SoCs, and/or any other type of computing device with the aforementioned requirements. In one or more examples, any or all of the aforementioned examples may be combined to create a system of such devices, which may collectively be referred to as a computing device. Other types of computing devices may be used without departing from the scope of examples described herein.

In some examples, the processor 102 is any component that includes circuitry for executing instructions (e.g., of a computer program). As an example, such circuitry may be integrated circuitry implemented, at least in part, using transistors implementing such components as arithmetic logic units, control units, logic gates, registers, first-in, first-out (FIFO) buffers, data and control buffers, etc. In some examples, the processor may include additional components, such as, for example, cache memory. In some examples, a processor retrieves and decodes instructions, which are then executed. Execution of instructions may include operating on data, which may include reading and/or writing data. In some examples, the instructions and data used by a processor are stored in the memory (e.g., memory device 108) of the computing device 100. A processor may perform various operations for executing software, such as operating systems, applications, etc. The processor 102 may cause data to be written from memory to storage of the computing device 100 and/or cause data to be read from storage via the memory. Examples of processors include, but are not limited to, central processing units (CPUs), graphics processing units (GPUs), neural processing units, tensor processing units, display processing units, digital signal processors (DSPs), finite state machines, etc. The processor 102 may be operatively connected to the memory device 108, any storage (e.g., UFS device 104, additional storage device 110) of the computing device 100, and/or to all or any portion of the cryptographic input component 112, the mask provider 114, the cryptographic algorithm execution component 116, the comparison component 118, and the randomizer 120. Although FIG. 1 shows the computing device 100 having a single processor 102, the computing device may include any number of processors without departing from the scope of examples described herein.

In some examples, the computing device 100 includes a UFS device 104. In some examples, the UFS device 104 is a flash storage device conforming to the UFS specification. The UFS device 104 may be used for storing data of any type. Data may be written to and/or read from the UFS device 104. As an example, the UFS device may store operating system images, software images, application data, etc. The UFS device 104 may store any other type of data without departing from the scope of examples described herein. In some examples, the UFS device 104 includes NAND flash storage. The UFS device 104 may use any other type of storage technology without departing from the scope of examples described herein. In some examples, the UFS device 104 is capable of data rates that are relatively faster than other storage devices (e.g., additional storage device 110) of the computing device 100. The UFS device 104 may be operatively connected to the processor 102, the memory device 108 the additional storage device 110 and/or to all or any portion of the cryptographic input component 112, the mask provider 114, the cryptographic algorithm execution component 116, the comparison component 118, and the randomizer 120. Although FIG. 1 shows the computing device 100 having a single UFS device 104, the computing device may include any number of UFS devices without departing from the scope of examples described herein. Additionally, although FIG. 1 shows the UFS device 104, the computing device 100 may include any other type of flash storage device without departing from the scope of examples described herein.

In some examples, the computing device 100 includes an additional storage device 110. In some examples, the additional storage device is a non-volatile storage device. The additional storage device 110 may, for example, be a persistent memory device. In some examples, the additional storage device 110 may be computer storage of any type. Examples of type of computer storage include, but are not limited to, hard disk drives, solid state drives, flash storage, tape drives, removable disk drives, Universal Serial Bus (USB) storage devices, secure digital (SD) cards, optical storage devices, read-only memory devices, etc. Although FIG. 1 shows the additional storage device 110 as part of the computing device 100, the additional storage device may be separate from and operatively connected to the computing device 100 (e.g., an external drive array, cloud storage, etc.). In some examples, the additional storage device 110 operates at a data rate that is relatively slower than the UFS device 104. In some examples, the additional storage device 110 is also a UFS storage device. In some examples, the additional storage device 110 is operatively connected to the processor 102, the UFS device 104, the memory device 108, and/or to all or any portion of the cryptographic input component 112, the mask provider 114, the cryptographic algorithm execution component 116, the comparison component 118, and the randomizer 120. Although FIG. 1 shows the computing device 100 having a single additional storage device 110, the computing device 100 may have any number of additional storage devices without departing from the scope of examples described herein.

In some examples, the computing device 100 includes a memory device 108. The memory device may be any type of computer memory. In some examples, the memory device 108 is a volatile storage device. As an example, the memory device 108 may be random access memory (RAM). In one or more examples, data stored in the memory device 108 is located at memory addresses, and is thus accessible to the processor 102 using the memory addresses. Similarly, the processor 102 may write data to and/or read data from the memory device 108 using the memory addresses. The memory device 108 may be used to store any type of data, such as, for example, computer programs, the results of computations, etc. In some examples, the memory device 108 is operatively connected to the processor 102, the UFS device 104, the additional storage device 110, and/or to all or any portion of the cryptographic input component 112, the mask provider 114, the cryptographic algorithm execution component 116, the comparison component 118, and the randomizer 120. Although FIG. 1 shows the computing device 100 having a single memory device 108, the computing device 100 may have any number of memory devices without departing from the scope of examples described herein.

In some examples, the computing device 100 includes the cryptographic input component 112. The cryptographic input component 112 may be any hardware (e.g., circuitry), software, firmware, or any combination thereof configured to obtain cryptographic input (e.g., a cryptographic key) and provide the same to the cryptographic algorithm execution component (discussed below). As an example, the cryptographic input component 112 may obtain a cryptographic key represented by any number of bits from a secure storage location on the computing device 100, and provide the bits as input for the cryptographic algorithm execution component 116.

In some examples, the computing device 100 includes the mask provider 114. The mask provider 114 may be any hardware (e.g., circuitry), software, firmware, or any combination thereof configured to generate a mask to be used as an additional input by the cryptographic algorithm execution component 116 to determine whether execution of a cryptographic algorithm should use standard logic or inverted logic. In some examples, the mask is a random mask. In some examples, the mask is a single randomly generated bit, to be provided as an input to a logic circuit to determine if the logic circuit will be executed using standard logic by not inverting the input bits of the cryptographic inputs (e.g., a cryptographic key). In such examples, another instance of the same logic is executed in parallel using the opposite of the single random mask bit. In some examples, the mask is a randomly generated mask with a number of randomly generated bits to be applied to corresponding input bits and output bits of the logic. As an example, a mask may be 101, and the logic may receive two inputs a and b for producing an output c. In such a scenario, the first bit of the mask, 1, may dictate that the first bit of the input, a, is to be inverted before being used in executing the logic, the second bit of the mask, 0, may be used to dictate that the second bit of the input, b, is not inverted, and the output of the logic is to be inverted. In some examples, such a mask may be a more fine-grained mask. When such a mask is used, the comparison component 118 (discussed below) may require the mask in order to effectively perform a comparison of the output of one instance of the logic circuit with an output of another instance of the logic circuit to which a separate, unique mask was applied. When a multi-bit random masked is used, the two logic instances may be executed in parallel, or executed sequentially, as the two separate random masks are usually unique relative to one another.

In some examples, the computing device 100 includes the cryptographic algorithm execution component 116. The cryptographic algorithm execution component 116 may be any hardware (e.g., circuitry), software, firmware, or any combination thereof configured to execute, a cryptographic algorithm. Such execution may include using all or any portion of the hardware, software, and/or firmware to implement two instances of a logic circuit each capable of implementing standard logic, inverted logic, or a combination thereof in the case of a multi-bit mask. In some examples, when a single bit random mask is used, one of the logic circuit instances, as dictated by the random mask bit is executed using either standard or inverted logic, while the other instance of the logic circuit is executed using whichever logic type was not used for the execution of the first instance of the circuit. In some examples, when a multi-bit random mask is used, the multi-bit mask is used to determine whether to invert or not each input bit and output bit of a first circuit instance, and a second randomly generated multi-mask bit is used to determine whether to invert or not the input and output bits for a second instance of the logic circuit, and the two separate masks are provided to the comparison component 118 for use in performing a comparison of the outputs of the two logic circuit instances.

In some examples, the computing device 100 includes the comparison component 118. The comparison component 118 may be any hardware (e.g., circuitry), software, firmware, or any combination thereof configured to perform a comparison of the outputs of two logic circuits used in execution of a cryptographic algorithm. In some examples, where a single bit mask is used to determine whether logic is standard or inverted for each of the two logic circuits, one of the two will be standard, and the other will be inverted. In such a scenario, the inverted logic and standard logic circuits are two instances of the same circuit, and the standard logic is provided not-inverted cryptographic inputs, while the inverted logic is provided inverted cryptographic inputs. Therefore, a successful comparison of the outputs occurs when one of the outputs is the inverse of the other output. A failed comparison occurs when the output of one of the outputs is not equal to the inverse of the other output. In some examples, where a separate multi-bit mask for each logic circuit is used to determine whether inputs and outputs are inverted individually, the comparison may include obtaining the two multi-bit masks and used by the comparison component 118 to reverse the masking by re-applying the respective masks to the output for each of the two outputs. In such a scenario, if the results of the two outputs after the reversing match, the comparison is successful, while if the two do not match, the comparison fails. In either scenario, a successful comparison may indicate that the output may be used, as neither circuit appears to have been subjected to a fault injection, which would cause a failed comparison. Additionally, the use of the random masks and separate instances of the same logic circuitry may prevent side channel attacks attempting to obtain information about whether inverted or standard logic was used in a given logic circuit (of the two used), as the two circuits, being the same, have the same characteristics during execution (e.g., in power, timing, voltages, etc.).

In some examples, the computing device 100 includes the randomizer 120. The randomizer 120 may be any hardware (e.g., circuitry), software, firmware, or any combination thereof configured to perform a randomization of the output of the execution of a cryptographic algorithm when the comparison component 118 determines that a comparison has failed. Any type of randomization may be performed without departing from the scope of examples described herein. As an example, the randomizer 120 may generate a random number, separately multiply the two outputs by the random number, and XOR the results. In some examples, randomization further reduces the likelihood that an attacker is able to gain any information about the execution of the cryptographic algorithm, even if the output is obtained after the failed comparison and randomization.

While FIG. 1 shows a certain number of components in a particular configuration, one of ordinary skill in the art will appreciate that the computing device 100 may include more components or fewer components, and/or components arranged in any number of alternate configurations without departing from the scope of examples described herein. Additionally, some or all of the components shown may be part of a single component, and any single component shown may be implemented as any number of discrete components. Additionally, although not shown in FIG. 1, one of ordinary skill in the art will appreciate that the computing device 100 may execute any amount or type of software or firmware (e.g., bootloaders, operating systems, hypervisors, virtual machines, computer applications, mobile device apps, etc.). Accordingly, examples disclosed herein should not be limited to the configuration of components shown in FIG. 1.

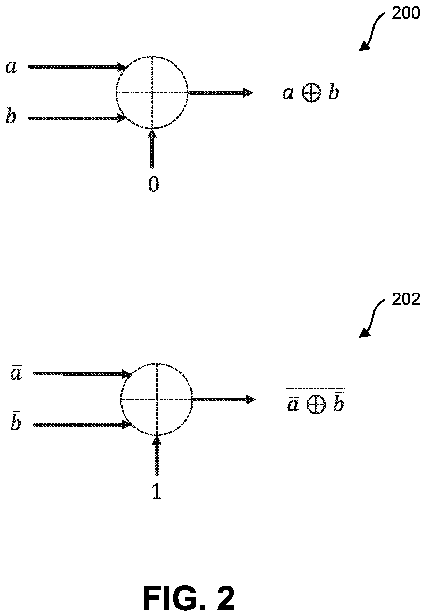

FIG. 2 is diagram illustrating a logic circuit for mitigating fault injection attacks in accordance with one or more examples described herein. The following example is for explanatory purposes only and not intended to limit the scope of examples described herein. Additionally, while the example shows certain aspects of examples described herein, all possible aspects of such examples may not be illustrated in this particular example.

FIG. 2 shows two logic circuits, 200 and 202. As shown in FIG. 2, the logic circuits themselves are the same. For the purposes of this example, the circuits are intentionally simple in order to illustrate certain aspects described herein. The logic circuits are an XOR logic gate being provided two cryptographic inputs a and b to produce a single output, an XOR of the inputs. In the logic circuit 200, a single bit random mask 0 is provided to the logic circuit 200. Therefore, the logic circuit is to be operated as a standard logic circuit, which is achieved by not inverting the inputs a and b. Accordingly, the output is an XOR of non-inverted a and b. As an example, if a is 1, and b is 0, the output is 1. In the logic circuit 202, a single bit random mask 1 is provided to the logic circuit 202. Therefore, the logic circuit 202 is operated as an inverted logic circuit, which is achieved by inverting the inputs a and b, which is represented by the line above the a and b inputs in logic circuit 202. As a result, the output is an inverted result of a XOR of inverted a and b. If a is 1, inverted a is 0, and if b is 0, inverted b is 1. The result of an XOR of inverted a and inverted b is thus 1. An inverted 1 is 0. Thus, the output of 200 1 and 202 is 0, Thus a comparison of the outputs is successful because the outputs are inverted versions of one another, and the output may be used.

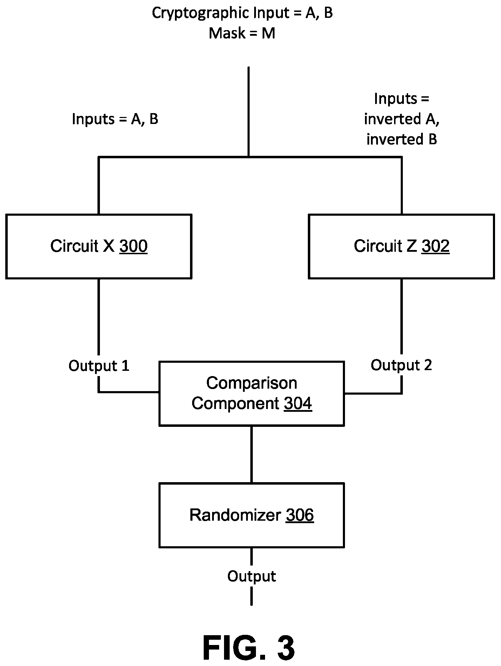

FIG. 3 is diagram illustrating a logic circuit for mitigating fault injection attacks in accordance with one or more examples described herein. The following example is for explanatory purposes only and not intended to limit the scope of examples described herein. Additionally, while the example shows certain aspects of examples described herein, all possible aspects of such examples may not be illustrated in this particular example.

FIG. 3 shows an example scenario in which two instances of the same circuit are implemented as part of a cryptographic algorithm execution component (e.g., the cryptographic algorithm execution component 116 of FIG. 1). In this scenario, a cryptographic input component (e.g., the cryptographic input component 112 of FIG. 1) obtains and provides to a cryptographic algorithm execution component a cryptographic input. In FIG. 3, for the sake of simplicity, the input is two bits A and B. However, a cryptographic input may be any number of bits such as, for example, the bits of a cryptographic key. Additionally, a mask provider (e.g., the mask provider 114 of FIG. 1) provides a mask M to the cryptographic algorithm execution device. The value of the mask M dictates whether the circuit X 300 or the circuit Z 302 are executed using inverted logic or standard logic. In this scenario, M is 0, which dictates that circuit X 300 will use standard logic. Thus, circuit Z 302 will use inverted logic. Accordingly, circuit X 300 is provided non-inverted input bits A and B, while circuit Z 302 is provided inverted A and inverted B. The input bits are used to execute the circuits in parallel. The output 1 of circuit X 300 is not inverted, while the output 2 of the circuit Z 302 is inverted. The results are compared by the comparison component 304 to determine whether output 2 is the inverse of output 1. When the comparison is successful, the output may be used without randomization by the randomizer 306. When the comparison is not successful, the output is randomized to prevent an attacker from using the output to obtain any information about the cryptographic input of the two circuits.

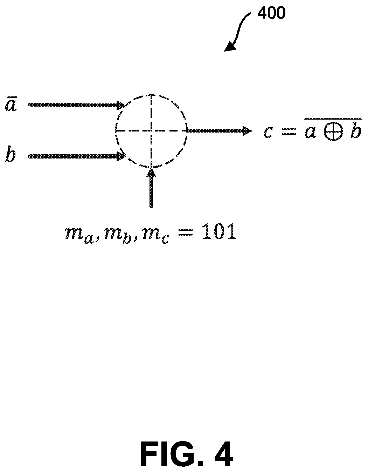

FIG. 4 is diagram illustrating a logic circuit for mitigating fault injection attacks in accordance with one or more examples described herein. The following example is for explanatory purposes only and not intended to limit the scope of examples described herein. Additionally, while the example shows certain aspects of examples described herein, all possible aspects of such examples may not be illustrated in this particular example.

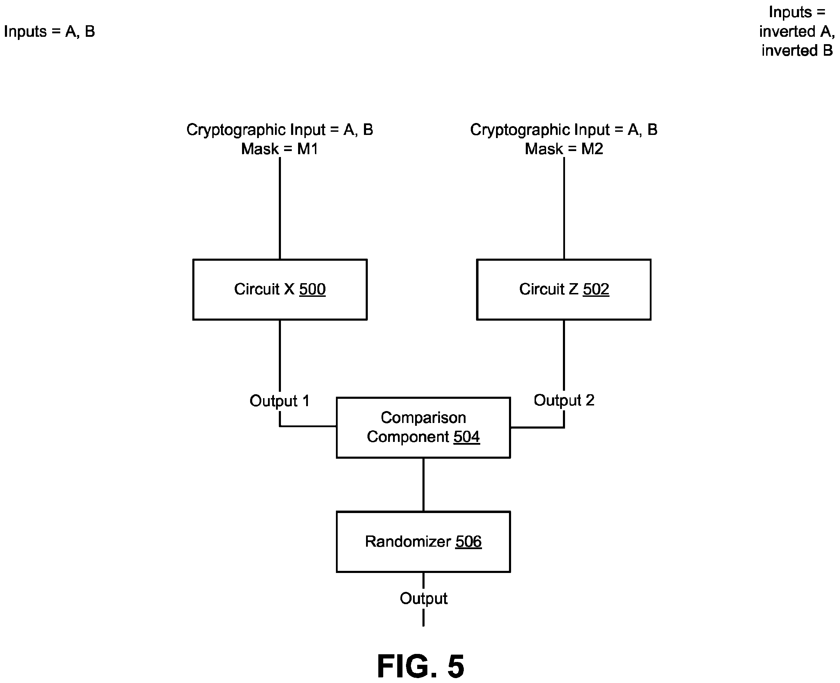

FIG. 4 shows a simple XOR logic circuit 400 to illustrate various aspects of examples described herein. As in logic circuits 200 and 202 of FIG. 2, the logic circuit 400 is provided two input bits a and b, and produces a single output c. However, the logic circuit 400 is provided a multi-bit mask [mₐ, m_{b}, m_{c}], which, in this scenario, is 101. The mask bit mₐ corresponds to the input bit a, the mask bit m_{b} corresponds to the input bit b, and the mask bit m_{c} corresponds to the output bit c. Thus each mask bit corresponds to one input or output bit, such that all input and output bits have a corresponding random mask. Here, mₐ being 1 dictates that the input a should be inverted, m_{b} being 0 indicates that the input b should not be inverted, and m_{c} being 1 indicates that the output c should be inverted. As will be discussed further in the description of FIG. 5, below, the two instances of the logic circuit 400 may be used to implement certain examples described herein where multi-bit masks are used. Each of the two instances may use a separate mask. Thus the circuits may be executed in parallel, or sequentially, as the two masks are unrelated.

FIG. 5 shows an example scenario in which two instances of the same circuit are implemented as part of a cryptographic algorithm component (e.g., the cryptographic algorithm component 116 of FIG. 1). Each of circuit X 500 and circuit Z 502, for example, may be instances of the logic circuit 400 shown in FIG. 4 and discussed above In this scenario, a cryptographic input component (e.g., the cryptographic input component 112 of FIG. 1) obtains and provides to a cryptographic algorithm execution component a cryptographic input to each of circuit X 500 and circuit Z 502. In FIG. 5, for the sake of simplicity, the input is two bits A and B. However, a cryptographic input may be any number of bits such as, for example, the bits of a cryptographic key.

Additionally, a mask provider (e.g., the mask provider 114 of FIG. 1) provides masks M1 and M2 to the cryptographic algorithm execution device. The mask M1 is to be used for circuit X 500, and the mask M2 is to be used for circuit Z 502. Each of the masks M1 and M2 are separate multi-bit masks that are unrelated to one another. The bits of the mask M1 dictate whether A, B, and output 1 are inverted or not. The bits of the mask M2 dictate whether A, B, and output 2 are inverted or not. After application of corresponding bits of the mask M1 are applied to the inputs A and B, circuit X 500 is executed, and after obtaining output 1, the corresponding bit of the mask M1 is applied to output 1. After application of corresponding bits of the mask M2 are applied to the inputs A and B, circuit Z 502 is executed, and after obtaining output 2, the corresponding bit of the mask M2 is applied to output 2.

In this scenario, circuit X 500 and circuit Z 502 are executed sequentially. Output 1 and output 2 are compared by the comparison component 504 to determine whether output 2 matches output 1. The comparison includes reapplying the mask M1 to output 1 and re-applying the mask M2 to output 2 to account for the separate multi-bit masking. When the comparison is successful (e.g., the outputs match), the output may be used without randomization by the randomizer 506. When the comparison is not successful, the output is randomized to prevent an attacker from using the output to obtain any information about the cryptographic input of the two circuits.

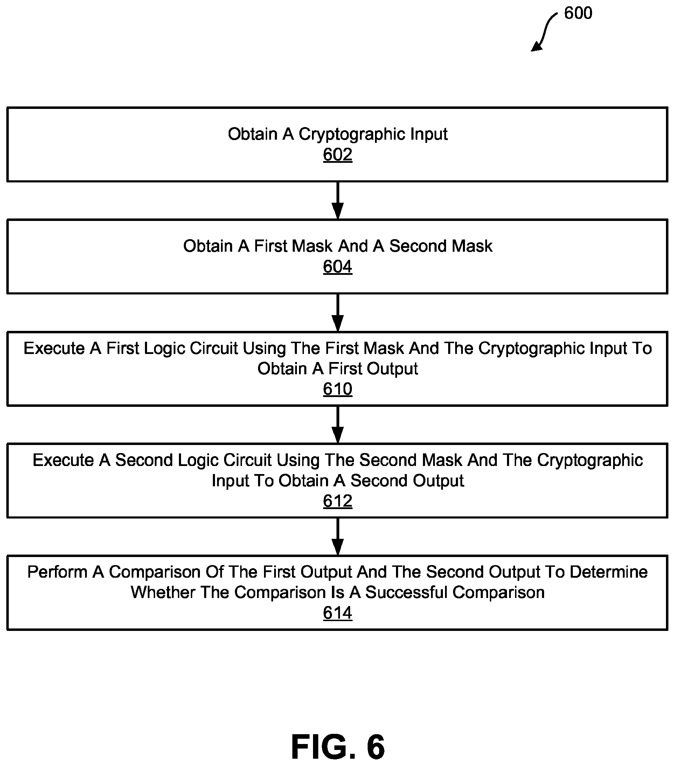

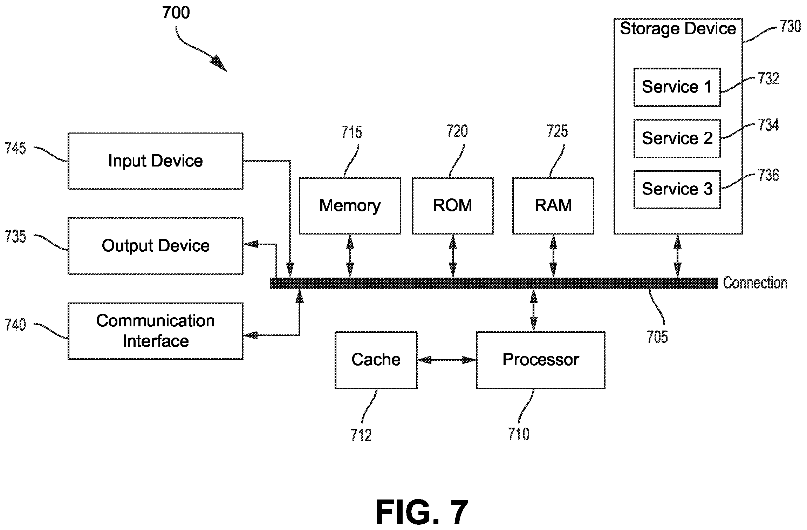

FIG. 6 is a flow diagram illustrating an example of a process 600 for providing countermeasures to fault injection attacks in accordance with one or more examples described herein. The process 600 may be performed, at least in part, for example, by the computing device 100 of FIG. 1 or any component therein (e.g., the cryptographic algorithm execution component 116 of FIG. 1), and/or the computing system 700 of FIG. 7.

At block 602, the process 600 includes obtaining a cryptographic input. In some examples, the cryptographic input (e.g., a cryptographic key) is obtained by a cryptographic algorithm execution component (e.g., the cryptographic algorithm execution component 116 of FIG. 1) from a cryptographic input component (e.g., the cryptographic input component 112 of FIG. 1). As an example, the cryptographic input component may obtain a cryptographic key represented by any number of bits from a secure storage location on a computing device (e.g., the computing device 100 of FIG. 1), and provide the bits as input for the cryptographic algorithm execution component 116.

At block 604, the process 600 includes obtaining a fist mask and a second mask. In some examples, the first mask and the second mask are obtained by a cryptographic algorithm execution component (e.g., the cryptographic algorithm execution component 116 of FIG. 1). In some examples, the first mask and the second mask are obtained from a mask provider (e.g., the mask provider 114 of FIG. 1). In some examples, the first mask is a single bit mask, and obtaining the second mask includes inverting the first mask to obtain an inverted second mask. In some examples, the first mask and the second mask are multi-bit masks that are each randomly generated. In such an example, the number of bits in the first mask and the second mask may match the number of bits of the cryptographic input.

At block 606, the process 600 includes executing a first logic circuit using the first mask and the cryptographic input to obtain a first output. The first logic circuit may be executed by a cryptographic algorithm execution component (e.g., the cryptographic algorithm execution component 116 of FIG. 1). In some examples, executing the first logic circuit includes using standard logic based on the first mask to obtain the first output.

At block 608, the process 600 includes executing a second logic circuit using the second mask and the cryptographic input to obtain a second output. The second logic circuit may be executed by a cryptographic algorithm execution component (e.g., the cryptographic algorithm execution component 116 of FIG. 1). In some examples, the first logic circuit and the second logic circuit are separate instances of a same circuit, and have the same side channel characteristics when executed. In some examples, executing the second logic circuit includes using inverted logic based on the inverted second mask to obtain the second output. In some examples, the second logic circuit inverts the cryptographic input and the second output to obtain an inverted second output.

At block 610, the process 600 includes performing a comparison of the first output and the second output to determine whether the comparison is a successful comparison. In some examples, the comparison is performed by a comparison component (e.g., the comparison component 116 of FIG. 1). In some examples, the successful comparison includes determining that the inverted second output is an inverted instance of the first output. In some examples, performing the successful comparison includes reapplying the first mask to the first output and the second mask to the second output, and making a determination of whether the first output matches the second output. In some examples, if the comparison was unsuccessful, a randomization of the first output and the second output may be performed (e.g., by the randomizer 120 of FIG. 1).

In some examples, the process 600, or any other process described herein may be performed by a computing device or apparatus, and/or one or more components therein and/or to which the computing device is operatively connected.

A computing device, may be, include, or be a component of any suitable device, such as a vehicle or a computing device of a vehicle (e.g., a driver monitoring system (DMS) of a vehicle), a mobile device (e.g., a mobile phone), a desktop computing device, a tablet computing device, a wearable device (e.g., a VR headset, an AR headset, AR glasses, a network-connected watch or smartwatch, or other wearable device), a server computer, a robotic device, a television, a smart speaker, a voice assistant device, a SoC, and/or any other device with the resource capabilities to perform the processes described herein, including the process 600, and/or other process described herein. In some cases, a computing device or apparatus (e.g., that includes a hardware identity impersonator) may include various components, such as one or more input devices, one or more output devices, one or more processors, one or more microprocessors, one or more microcomputers, one or more cameras, one or more sensors, and/or other component(s) that are configured to carry out the operations of processes described herein. In some examples, the computing device may include a display, a network interface configured to communicate and/or receive the data, an RF sensing component, any combination thereof, and/or other component(s). The network interface may be configured to communicate and/or receive Internet Protocol (IP) based data or other type of data.

The components of a computing device (e.g., the computing device 100 of FIG. 1) may be implemented, at least in part, in circuitry. For example, the components can include and/or can be implemented using electronic circuits or other electronic hardware, which can include one or more programmable electronic circuits (e.g., microprocessors, graphics processing units (GPUs), digital signal processors (DSPs), central processing units (CPUs), finite state machines, and/or other suitable electronic circuits), and/or can include and/or be implemented, at least in part, using computer software, firmware, or any combination thereof, to perform the various operations described herein.

The process 600 shown in FIG. 6 is illustrated as a logical flow diagram, the operation of which represents a sequence of operations that can be implemented in hardware, computer instructions, or a combination thereof. In the context of computer instructions, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular data types. The order in which the operations are described is not intended to be construed as a limitation, and any number of the described operations can be combined in any order and/or in parallel to implement the processes.

Additionally, the process 600, and/or other process described herein may be performed under the control of one or more computer systems configured with executable instructions and may be implemented as code (e.g., executable instructions, one or more computer programs, or one or more applications) executing collectively on one or more processors, by hardware, or combinations thereof. As noted above, the code may be stored on a computer-readable or machine-readable storage medium, for example, in the form of a computer program comprising a plurality of instructions executable by one or more processors. The computer-readable or machine-readable storage medium may be non-transitory.

FIG. 7 is a diagram illustrating an example of a system for implementing certain aspects of the present technology. In particular, FIG. 7 illustrates an example of computing system 700, which can be for example any computing device making up internal computing system, a remote computing system, a camera, or any component thereof in which the components of the system are in communication with each other using connection 705. Connection 705 can be a physical connection using a bus, or a direct connection into processor 710, such as in a chipset architecture. Connection 705 can also be a virtual connection, networked connection, or logical connection.

In some examples, computing system 700 is a distributed system in which the functions described in this disclosure can be distributed within a datacenter, multiple data centers, a peer network, etc. In some examples, one or more of the described system components represents many such components each performing some or all of the function for which the component is described. In some examples, the components can be physical or virtual devices.

Example system 700 includes at least one processing unit (CPU or processor) 710 and connection 705 that couples various system components including system memory 715, such as read-only memory (ROM) 720 and random access memory (RAM) 725 to processor 710. Computing system 700 can include a cache 712 of high-speed memory connected directly with, in close proximity to, or integrated as part of processor 710.

Processor 710 can include any general purpose processor and a hardware service or software service, such as services 732, 734, and 736 stored in storage device 730, configured to control processor 710 as well as a special-purpose processor where software instructions are incorporated into the actual processor design. Processor 710 may essentially be a completely self-contained computing system, containing multiple cores or processors, a bus, memory controller, cache, etc. A multi-core processor may be symmetric or asymmetric.

To enable user interaction, computing system 700 includes an input device 745, which can represent any number of input mechanisms or sensors, such as a microphone for speech (e.g., a user speaking), a touch-sensitive screen for gesture or graphical input (e.g., a user performing sign language symbols, a user shaking a phone, etc.), keyboard (e.g., a user pressing a key), mouse, motion input, a determination that a user is in a location indicated by a positioning system or modem sub-system, etc., which may be used to activate counters described in previous sections and enable/disable the asset transmission chain at any stage previously described. Computing system 700 can also include output device 735, which can be one or more of a number of output mechanisms. In some instances, multimodal systems can enable a user to provide multiple types of input/output to communicate with computing system 700. Computing system 700 can include communications interface 740, which can generally govern and manage the user input and system output. The communication interface may perform or facilitate receipt and/or transmission wired or wireless communications using wired and/or wireless transceivers, including those making use of an audio j ack/plug, a microphone jack/plug, a universal serial bus (USB) port/plug, an Apple^{®} Lightning^{®} port/plug, an Ethernet port/plug, a fiber optic port/plug, a proprietary wired port/plug, a BLUETOOTH^{®} wireless signal transfer, a BLUETOOTH^{®} low energy (BLE) wireless signal transfer, an IBEACON^{®} wireless signal transfer, a radio-frequency identification (RFID) wireless signal transfer, near-field communications (NFC) wireless signal transfer, dedicated short range communication (DSRC) wireless signal transfer, 802.11 Wi-Fi wireless signal transfer, wireless local area network (WLAN) signal transfer, Visible Light Communication (VLC), Worldwide Interoperability for Microwave Access (WiMAX), Infrared (IR) communication wireless signal transfer, Public Switched Telephone Network (PSTN) signal transfer, Integrated Services Digital Network (ISDN) signal transfer, 3G/4G/5G/LTE cellular data network wireless signal transfer, ad-hoc network signal transfer, radio wave signal transfer, microwave signal transfer, infrared signal transfer, visible light signal transfer, ultraviolet light signal transfer, wireless signal transfer along the electromagnetic spectrum, or some combination thereof. The communications interface 440 may also include one or more Global Navigation Satellite System (GNSS) receivers or transceivers that are used to determine a location of the computing system 700 based on receipt of one or more signals from one or more satellites associated with one or more GNSS systems. GNSS systems include, but are not limited to, the US-based Global Positioning System (GPS), the Russia-based Global Navigation Satellite System (GLONASS), the China-based BeiDou Navigation Satellite System (BDS), and the Europe-based Galileo GNSS. There is no restriction on operating on any particular hardware arrangement, and therefore the basic features here may easily be substituted for improved hardware or firmware arrangements as they are developed.

Storage device 730 can be a non-volatile and/or non-transitory and/or computer-readable memory device and can be a hard disk or other types of computer readable media which can store data that are accessible by a computer, such as magnetic cassettes, flash memory cards, solid state memory devices, digital versatile disks, cartridges, a floppy disk, a flexible disk, a hard disk, magnetic tape, a magnetic strip/stripe, any other magnetic storage medium, flash storage, memristor memory, any other solid-state memory, a compact disc read only memory (CD-ROM) optical disc, a rewritable compact disc (CD) optical disc, digital video disk (DVD) optical disc, a blu-ray^{®} disc (BDD) optical disc, a holographic optical disk, another optical medium, a secure digital (SD) card, a micro secure digital (microSD) card, a Memory Stick^{®} card, a smartcard chip, a EMV chip, a subscriber identity module (SIM) card, a mini/micro/nano/pico SIM card, another integrated circuit (IC) chip/card, random access memory (RAM), static RAM (SRAM), dynamic RAM (DRAM), read-only memory (ROM), programmable read-only memory (PROM), erasable programmable read-only memory (EPROM), electrically erasable programmable read-only memory (EEPROM), flash EPROM (FLASHEPROM), cache memory (L1/L2/L3/L4/L5/L#), resistive random-access memory (RRAM/ReRAM), phase change memory (PCM), spin transfer torque RAM (STT-RAM), another memory chip or cartridge, and/or a combination thereof. The storage device 730 can include software instructions or code that can be executed by the processor 710 to cause the system 700 to perform a function.

As used herein, the term "computer-readable medium" includes, but is not limited to, portable or non-portable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted using any suitable means including memory sharing, message passing, token passing, network transmission, or the like.

In some examples the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Specific details are provided in the description above to provide a thorough understanding of the examples and examples provided herein. However, it will be understood by one of ordinary skill in the art that the examples may be practiced without these specific details. For clarity of explanation, in some instances the present technology may be presented as including individual functional blocks including functional blocks comprising devices, device components, operations, steps, or routines in a method embodied in software, hardware, or combinations of hardware and software. Additional components may be used other than those shown in the figures and/or described herein. For example, circuits, systems, networks, processes, and other components may be shown as components in block diagram form in order not to obscure the examples in unnecessary detail. In other instances, well-known circuits, processes, algorithms, structures, and techniques may be shown without unnecessary detail in order to avoid obscuring the examples.

Individual examples may be described above as a process or method which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional operations not included in a figure. A process may correspond to a method, a function, a procedure, a subroutine, a subprogram, etc. When a process corresponds to a function, its termination can correspond to a return of the function to the calling function or the main function.

Processes and methods according to the above-described examples can be implemented using computer-executable instructions that are stored or otherwise available from computer-readable media. Such instructions can include, for example, instructions and data which cause or otherwise configure a general purpose computer, special purpose computer, or a processing device to perform a certain function or group of functions. Portions of computer resources used can be accessible over a network. The computer executable instructions may be, for example, binaries, intermediate format instructions such as assembly language, firmware, source code, etc. Examples of computer-readable media that may be used to store instructions, information used, and/or information created during methods according to described examples include magnetic or optical disks, flash memory, USB devices provided with non-volatile memory, networked storage devices, and so on.

Devices implementing processes and methods according to these disclosures can include hardware, software, firmware, middleware, microcode, hardware description languages, or any combination thereof, and can take any of a variety of form factors. When implemented in software, firmware, middleware, or microcode, the program code or code segments to perform the necessary tasks (e.g., a computer-program product) may be stored in a computer-readable or machine-readable medium. A processor(s) may perform the necessary tasks. Typical examples of form factors include laptops, smartphones, mobile phones, tablet devices or other small form factor personal computers, personal digital assistants, rackmount devices, standalone devices, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are example means for providing the functions described in the disclosure.

In the foregoing description, aspects of the application are described with reference to specific examples thereof, but those skilled in the art will recognize that the application is not limited thereto. Thus, while illustrative examples of the application have been described in detail herein, it is to be understood that the inventive concepts may be otherwise variously embodied and employed, and that the appended claims are intended to be construed to include such variations, except as limited by the prior art. Various features and aspects of the above-described application may be used individually or jointly. Further, examples described herein can be utilized in any number of environments and applications beyond those described herein without departing from scope of the appended claims. The specification and drawings are, accordingly, to be regarded as illustrative rather than restrictive. For the purposes of illustration, methods were described in a particular order. It should be appreciated that in alternate examples, the methods may be performed in a different order than that described.

One of ordinary skill will appreciate that the less than ("<") and greater than (">") symbols or terminology used herein can be replaced with less than or equal to ("≤") and greater than or equal to (" ≥ ") symbols, respectively, without departing from the scope of this description.

Where components are described as being "configured to" perform certain operations, such configuration can be accomplished, for example, by designing electronic circuits or other hardware to perform the operation, by programming programmable electronic circuits (e.g., microprocessors, or other suitable electronic circuits) to perform the operation, or any combination thereof.

The phrase "coupled to" refers to any component that is physically connected to another component either directly or indirectly, and/or any component that is in communication with another component (e.g., connected to the other component over a wired or wireless connection, and/or other suitable communication interface) either directly or indirectly.

Claim language or other language reciting "at least one of" a set and/or "one or more" of a set indicates that one member of the set or multiple members of the set (in any combination) satisfy the claim. For example, claim language reciting "at least one of A and B" or "at least one of A or B" means A, B, or A and B. In another example, claim language reciting "at least one of A, B, and C" or "at least one of A, B, or C" means A, B, C, or A and B, or A and C, or B and C, or A and B and C. The language "at least one of" a set and/or "one or more" of a set does not limit the set to the items listed in the set. For example, claim language reciting "at least one of A and B" or "at least one of A or B" can mean A, B, or A and B, and can additionally include items not listed in the set of A and B.

The various illustrative logical blocks, modules, circuits, and algorithm operations described in connection with the examples disclosed herein may be implemented as electronic hardware, computer software, firmware, or combinations thereof. To clearly illustrate this interchangeability of hardware and software, various illustrative components, blocks, modules, circuits, and operations have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present application.

The techniques described herein may also be implemented in electronic hardware, computer software, firmware, or any combination thereof. Such techniques may be implemented in any of a variety of devices such as general purposes computers, wireless communication device handsets, or integrated circuit devices having multiple uses including application in wireless communication device handsets and other devices. Any features described as modules or components may be implemented together in an integrated logic device or separately as discrete but interoperable logic devices. If implemented in software, the techniques may be realized at least in part by a computer-readable data storage medium comprising program code including instructions that, when executed, performs one or more of the methods described above. The computer-readable data storage medium may form part of a computer program product, which may include packaging materials. The computer-readable medium may comprise memory or data storage media, such as random access memory (RAM) such as synchronous dynamic random access memory (SDRAM), read-only memory (ROM), non-volatile random access memory (NVRAM), electrically erasable programmable read-only memory (EEPROM), FLASH memory, magnetic or optical data storage media, and the like. The techniques additionally, or alternatively, may be realized at least in part by a computer-readable communication medium that carries or communicates program code in the form of instructions or data structures and that can be accessed, read, and/or executed by a computer, such as propagated signals or waves.

The program code may be executed by a processor, which may include one or more processors, such as one or more digital signal processors (DSPs), general purpose microprocessors, an application specific integrated circuits (ASICs), field programmable logic arrays (FPGAs), or other equivalent integrated or discrete logic circuitry. Such a processor may be configured to perform any of the techniques described in this disclosure. A general purpose processor may be a microprocessor; but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Accordingly, the term "processor," as used herein may refer to any of the foregoing structure, any combination of the foregoing structure, or any other structure or apparatus suitable for implementation of the techniques described herein.

## Claims

1. A method (600) for security processing, the method comprising:
obtaining (602) a cryptographic input (A, B);
obtaining (604) a random mask (M);
executing (610) a first logic circuit (300) using the cryptographic input (A, B) to obtain a first output;
executing (612) a second logic circuit (302) using the cryptographic input (A, B) to obtain a second output; and
performing (614) a comparison of the first output and the second output to determine whether the comparison is a successful comparison,
wherein the first logic circuit (300) and the second logic circuit (302) are separate instances of a same circuit, and wherein executing (610) the first logic circuit (300) and executing (612) the second logic circuit (302) comprises, based on a value of the random mask (M), executing (610) the first logic circuit (300) using standard logic and executing (612) the second logic circuit (302) using inverted logic.

2. The method (600) of claim 1, wherein the mask (M) is a single bit mask.

3. The method (600) of claims 1, wherein the first logic circuit (300) and the second logic circuit (302) are executed in parallel.

4. The method (600) of claim 1, wherein executing (612) the second logic circuit (302) using inverted logic comprises inverting bits of the cryptographic input (A, B) before executing the second logic circuit (302).

5. The method (600) of claim 4, further comprising, prior to performing (614) the comparison, inverting the second output.

6. The method (600) of claim 1, wherein the cryptographic input (A, B) is a cryptographic key.

7. The method (600) of claim 1, further comprising:
making a determination that the comparison is not successful; and
performing, based on the determination, a randomization of the first output and the second output.

8. An apparatus (100, 700) for security processing, the apparatus comprising:
at least one memory (104, 108, 110, 712, 715, 720, 725, 730); and
at least one processor (102, 710) coupled to the at least one memory and configured to:
obtain a cryptographic input (A, B);
obtain a random mask (M);
execute a first logic circuit (300) using the cryptographic input (A, B) to obtain a first output;
execute a second logic circuit (302) using the cryptographic input (A, B) to obtain a second output; and
perform a comparison of the first output and the second output to determine whether the comparison is a successful comparison,
wherein the first logic circuit (300) and the second logic circuit (302) are separate instances of a same circuit, and wherein, to execute the first logic circuit (300) and to execute the second logic circuit (302), the at least one processor is configured to, based on a value of the random mask (M), execute the first logic circuit (300) using standard logic and execute the second logic circuit (302) using inverted logic.

9. The apparatus (100, 700) of claim 8, wherein the mask (M) is a single bit mask.

10. The apparatus (100, 700) of claim 8, wherein the at least one processor (102, 710) is configured to execute the first logic circuit (300) and the second logic circuit (302) in parallel.

11. The apparatus (100, 700) of claim 8, wherein, to execute the second logic circuit (302) using inverted logic, the at least one processor (102, 710) is configured to: invert bits of the cryptographic input (A, B) before executing the second logic circuit (302).

12. The apparatus (100, 700) of claim 8, wherein the at least one processor (102, 710) is further configured to, prior to performing the comparison, invert the second output.

13. The apparatus (100, 700) of claim 8, wherein the cryptographic input (A, B) is a cryptographic key.

14. The apparatus (100, 700) of claim 8, wherein the at least one processor (102, 710) is configured to:
make a determination that the comparison is not successful; and
perform, based on the determination, a randomization of the first output and the second output.

15. A non-transitory computer-readable medium having stored thereon instructions that, when executed by one or more processors (102, 710), cause the one or more processors to:
obtain a cryptographic input (A, B);
obtain a random mask (M);
execute a first logic circuit (300) using the cryptographic input to obtain a first output;
execute a second logic circuit (302) using the cryptographic input to obtain a second output; and
perform a comparison of the first output and the second output to determine whether the comparison is a successful comparison,
wherein the first logic circuit (300) and the second logic circuit (302) are separate instances of a same circuit, and wherein executing the first logic circuit (300) and executing the second logic circuit (302) comprises, based on a value of the random mask (M), executing the first logic circuit (300) using standard logic and executing the second logic circuit (302) using inverted logic.

## Patentansprüche

1. Verfahren (600) zur Sicherheitsverarbeitung, wobei das Verfahren Folgendes umfasst:
Erhalten (602) einer kryptographischen Eingabe (A, B);
Erhalten (604) einer Zufallsmaske (M);
Ausführen (610) einer ersten Logikschaltung (300) unter Verwendung der kryptographischen Eingabe (A, B), um eine erste Ausgabe zu erhalten;
Ausführen (612) einer zweiten Logikschaltung (302) unter Verwendung der kryptographischen Eingabe (A, B), um eine zweite Ausgabe zu erhalten; und
Durchführen (614) eines Vergleichs der ersten Ausgabe und der zweiten Ausgabe, um zu bestimmen, ob der Vergleich ein erfolgreicher Vergleich ist,
wobei die erste Logikschaltung (300) und die zweite Logikschaltung (302) separate Instanzen derselben Schaltung sind, und wobei das Ausführen (610) der ersten Logikschaltung (300) und das Ausführen (612) der zweiten Logikschaltung (302) umfasst, basierend auf einem Wert der Zufallsmaske (M), das Ausführen (610) der ersten Logikschaltung (300) unter Verwendung von Standardlogik und das Ausführen (612) der zweiten Logikschaltung (302) unter Verwendung von invertierter Logik.

2. Verfahren (600) nach Anspruch 1, wobei die Maske (M) eine Ein-Bit-Maske ist.

3. Verfahren (600) nach Anspruch 1, wobei die erste Logikschaltung (300) und die zweite Logikschaltung (302) parallel ausgeführt werden.

4. Verfahren (600) nach Anspruch 1, wobei das Ausführen (612) der zweiten Logikschaltung (302) unter Verwendung von invertierter Logik das Invertieren von Bits der kryptographischen Eingabe (A, B) vor dem Ausführen der zweiten Logikschaltung (302) umfasst.

5. Verfahren (600) nach Anspruch 4, weiter umfassend, vor dem Durchführen (614) des Vergleichs, das Invertieren der zweiten Ausgabe.

6. Verfahren (600) nach Anspruch 1, wobei die kryptographische Eingabe (A, B) ein kryptographischer Schlüssel ist.

7. Verfahren (600) nach Anspruch 1, weiter umfassend:
Treffen einer Bestimmung, dass der Vergleich nicht erfolgreich ist; und
Durchführen, basierend auf der Bestimmung, einer Randomisierung der ersten Ausgabe und der zweiten Ausgabe.

8. Einrichtung (100, 700) zur Sicherheitsverarbeitung, wobei die Einrichtung Folgendes umfasst:
mindestens einen Speicher (104, 108, 110, 712, 715, 720, 725, 730); und
mindestens einen Prozessor (102, 710), an den mindestens einen Speicher gekoppelt und ausgebildet zu Folgendem:
Erhalten einer kryptographischen Eingabe (A, B);
Erhalten einer Zufallsmaske (M);
Ausführen einer ersten Logikschaltung (300) unter Verwendung der kryptographischen Eingabe (A, B), um eine erste Ausgabe zu erhalten;
Ausführen einer zweiten Logikschaltung (302) unter Verwendung der kryptographischen Eingabe (A, B), um eine zweite Ausgabe zu erhalten; und
Durchführen eines Vergleichs der ersten Ausgabe und der zweiten Ausgabe, um zu bestimmen, ob der Vergleich ein erfolgreicher Vergleich ist,
wobei die erste Logikschaltung (300) und die zweite Logikschaltung (302) separate Instanzen derselben Schaltung sind, und wobei, zum Ausführen der ersten Logikschaltung (300) und zum Ausführen der zweiten Logikschaltung (302), der mindestens eine Prozessor ausgebildet ist, basierend auf einem Wert der Zufallsmaske (M), die erste Logikschaltung (300) unter Verwendung von Standardlogik auszuführen und die zweite Logikschaltung (302) unter Verwendung von invertierter Logik auszuführen.

9. Einrichtung (100, 700) nach Anspruch 8, wobei die Maske (M) eine Ein-Bit-Maske ist.

10. Einrichtung (100, 700) nach Anspruch 8, wobei der mindestens eine Prozessor (102, 710) ausgebildet ist, die erste Logikschaltung (300) und die zweite Logikschaltung (302) parallel auszuführen.

11. Einrichtung (100, 700) nach Anspruch 8, wobei, zum Ausführen der zweiten Logikschaltung (302) unter Verwendung von invertierter Logik, der mindestens eine Prozessor (102, 710) ausgebildet ist, um: Bits der kryptographischen Eingabe (A, B) vor dem Ausführen der zweiten Logikschaltung (302) zu invertieren.

12. Einrichtung (100, 700) nach Anspruch 8, wobei der mindestens eine Prozessor (102, 710) weiter ausgebildet ist, vor dem Durchführen des Vergleichs die zweite Ausgabe zu invertieren.

13. Einrichtung (100, 700) nach Anspruch 8, wobei die kryptographische Eingabe (A, B) ein kryptographischer Schlüssel ist.

14. Einrichtung (100, 700) nach Anspruch 8, wobei der mindestens eine Prozessor (102, 710) ausgebildet ist, um:
zu bestimmen, dass der Vergleich nicht erfolgreich ist; und
basierend auf der Bestimmung, eine Randomisierung der ersten Ausgabe und der zweiten Ausgabe durchzuführen.

15. Nicht-transitorisches computerlesbares Medium, auf dem Anweisungen gespeichert sind, die, wenn sie durch ein oder mehrere Prozessoren (102, 710) ausgeführt werden, den einen oder die mehreren Prozessoren veranlassen zu Folgendem:
Erhalten einer kryptographischen Eingabe (A, B);
Erhalten einer Zufallsmaske (M);
Ausführen einer ersten Logikschaltung (300) unter Verwendung der kryptographischen Eingabe, um eine erste Ausgabe zu erhalten;
Ausführen einer zweiten Logikschaltung (302) unter Verwendung der kryptographischen Eingabe, um eine zweite Ausgabe zu erhalten; und
Durchführen eines Vergleichs der ersten Ausgabe und der zweiten Ausgabe, um zu bestimmen, ob der Vergleich ein erfolgreicher Vergleich ist,
wobei die erste Logikschaltung (300) und die zweite Logikschaltung (302) separate Instanzen derselben Schaltung sind, und wobei das Ausführen der ersten Logikschaltung (300) und das Ausführen der zweiten Logikschaltung (302) umfasst, basierend auf einem Wert der Zufallsmaske (M), das Ausführen der ersten Logikschaltung (300) unter Verwendung von Standardlogik und das Ausführen der zweiten Logikschaltung (302) unter Verwendung von invertierter Logik.

## Revendications

1. Procédé (600) de traitement de sécurité, le procédé comprenant :
le fait d'obtenir (602) une entrée cryptographique (A, B) ;
le fait d'obtenir (604) un masque aléatoire (M) ;
le fait d'exécuter (610) un premier circuit logique (300) en utilisant l'entrée cryptographique (A, B) pour obtenir une première sortie ;
le fait d'exécuter (612) un deuxième circuit logique (302) en utilisant l'entrée cryptographique (A, B) pour obtenir une deuxième sortie ; et
le fait de réaliser (614) une comparaison de la première sortie et de la deuxième sortie pour déterminer si la comparaison est une comparaison réussie,
dans lequel le premier circuit logique (300) et le deuxième circuit logique (302) sont des instances distinctes d'un même circuit, et dans lequel l'exécution (610) du premier circuit logique (300) et l'exécution (612) du deuxième circuit logique (302) comprend, sur la base d'une valeur du masque aléatoire (M), une exécution (610) du premier circuit logique (300) en utilisant une logique standard et une exécution (612) du deuxième circuit logique (302) en utilisant une logique inversée.

2. Procédé (600) selon la revendication 1, dans lequel le masque (M) est un masque à un seul bit.

3. Procédé (600) selon la revendication 1, dans lequel le premier circuit logique (300) et le deuxième circuit logique (302) sont exécutés en parallèle.

4. Procédé (600) selon la revendication 1, dans lequel l'exécution (612) du deuxième circuit logique (302) en utilisant une logique inversée comprend une inversion de bits de l'entrée cryptographique (A, B) avant d'exécuter le deuxième circuit logique (302).

5. Procédé (600) selon la revendication 4, comprenant en outre, avant de réaliser (614) la comparaison, une inversion de la deuxième sortie.

6. Procédé (600) selon la revendication 1, dans lequel l'entrée cryptographique (A, B) est une clé cryptographique.

7. Procédé (600) selon la revendication 1, comprenant en outre :
le fait d'effectuer une détermination selon laquelle la comparaison n'est pas réussie ; et
le fait de réaliser, sur la base de la détermination, une répartition aléatoire de la première sortie et de la deuxième sortie.

8. Appareil (100, 700) de traitement de sécurité, l'appareil comprenant :
au moins une mémoire (104, 108, 110, 712, 715, 720, 725, 730) ; et
au moins un processeur (102, 710) couplé à l'au moins une mémoire et configuré pour :
obtenir une entrée cryptographique (A, B) ;
obtenir un masque aléatoire (M) ;
exécuter un premier circuit logique (300) en utilisant l'entrée cryptographique (A, B) pour obtenir une première sortie ;
exécuter un deuxième circuit logique (302) en utilisant l'entrée cryptographique (A, B) pour obtenir une deuxième sortie ; et
réaliser une comparaison de la première sortie et de la deuxième sortie pour déterminer si la comparaison est une comparaison réussie,
dans lequel le premier circuit logique (300) et le deuxième circuit logique (302) sont des instances distinctes d'un même circuit, et dans lequel, pour exécuter le premier circuit logique (300) et pour exécuter le deuxième circuit logique (302), l'au moins un processeur est configuré pour, sur la base d'une valeur du masque aléatoire (M), exécuter le premier circuit logique (300) en utilisant une logique standard et exécuter le deuxième circuit logique (302) en utilisant une logique inversée.

9. Appareil (100, 700) selon la revendication 8, dans lequel le masque (M) est un masque à un seul bit.

10. Appareil (100, 700) selon la revendication 8, dans lequel l'au moins un processeur (102, 710) est configuré pour exécuter le premier circuit logique (300) et le deuxième circuit logique (302) en parallèle.

11. Appareil (100, 700) selon la revendication 8, dans lequel, pour exécuter le deuxième circuit logique (302) en utilisant une logique inversée, l'au moins un processeur (102, 710) est configuré pour : inverser des bits de l'entrée cryptographique (A, B) avant d'exécuter le deuxième circuit logique (302).

12. Appareil (100, 700) selon la revendication 8, dans lequel l'au moins un processeur (102, 710) est en outre configuré pour, avant de réaliser la comparaison, inverser la deuxième sortie.

13. Appareil (100, 700) selon la revendication 8, dans lequel l'entrée cryptographique (A, B) est une clé cryptographique.

14. Appareil (100, 700) selon la revendication 8, dans lequel l'au moins un processeur (102, 710) est configuré pour :
effectuer une détermination selon laquelle la comparaison n'est pas réussie ; et
réaliser, sur la base de la détermination, une répartition aléatoire de la première sortie et de la deuxième sortie.

15. Support lisible par ordinateur non transitoire ayant des instructions stockées sur celui-ci qui, lorsqu'elles sont exécutées par un ou plusieurs processeurs (102, 710), amènent les un ou plusieurs processeurs à :
obtenir une entrée cryptographique (A, B) ;
obtenir un masque aléatoire (M) ;
exécuter un premier circuit logique (300) en utilisant l'entrée cryptographique pour obtenir une première sortie ;
exécuter un deuxième circuit logique (302) en utilisant l'entrée cryptographique pour obtenir une deuxième sortie ; et
réaliser une comparaison de la première sortie et de la deuxième sortie pour déterminer si la comparaison est une comparaison réussie,
dans lequel le premier circuit logique (300) et le deuxième circuit logique (302) sont des instances distinctes d'un même circuit, et dans lequel l'exécution du premier circuit logique (300) et l'exécution du deuxième circuit logique (302) comprend, sur la base d'une valeur du masque aléatoire (M), une exécution du premier circuit logique (300) en utilisant une logique standard et une exécution du deuxième circuit logique (302) en utilisant une logique inversée.
